# EUROPEAN PATENT SPECIFICATION

(11) **EP 4 152 286 B1**
(45) Date of publication and mention of the grant of the patent: **29.04.2026**
(21) Application number: 22166128.3
(22) Date of filing: 31.03.2022
(51) Int. Cl.: G07F 13/06, A47J 31/40

(54) **MACHINE FOR THE AUTOMATIC DISPENSING OF BEVERAGES OBTAINED FROM SOLUBLE PRODUCTS, WITH A SUCTION SYSTEM**
MASCHINE ZUM AUTOMATISCHEN AUSGEBEN VON GETRÄNKEN AUS LÖSLICHEN PRODUKTEN MIT EINEM SAUGSYSTEM
MACHINE POUR LA DISTRIBUTION AUTOMATIQUE DE BOISSONS OBTENUES À PARTIR DE PRODUITS SOLUBLES, COMPRENANT UN SYSTÈME D'ASPIRATION

(30) Priority: 21.09.2021 IT 202100024152
(43) Date of publication of application: 22.03.2023
(73) Proprietor: Bianchi Industry S.p.a., Frazione Zingonia (IT)
(72) Inventor: ZAVATTI, Marco, 24040 Castel Rozzone BG (IT); QUADRIO, Mattia, 20861 Brugherio MB (IT)
(74) Representative: Modiano, Micaela Nadia

(56) References cited:
- EP-A1- 0 909 575
- US-A1- 2011 097 465
- US-A1- 2019 191 917

## Description

The present invention relates to a machine for the automatic dispensing of beverages obtained from soluble products (such as milk, chocolate, tea, coffee, or the like) provided with a suction system.

In greater detail, the machine according to the present invention is a machine of the type commonly known as vending machine or also a semi-automatic coffee machine, which allows the preparation and dispensing of a beverage by means of a mixing system (mixer) in which a soluble product is mixed with hot or cold water so as to obtain the beverage, which is then placed in a container (typically a cup). EP0909575A1 discloses a vending machine which comprises a mixing chamber for preparing beverages wherein steam and vapour are removed from the mixing chamber. A vertical divider wall separates the mixing chamber in two parts, the lower part of the chamber is used for injecting ingredients and liquids, and the upper part of the chamber has an outlet wherethrough steam is removed by suction. US2011/097465A1 discloses a beverage making apparatus wherein an air moving apparatus is connected to a vessel and controls the intensity of airflow circulating through the vessel by using valves. US2019/191917A1 relates to a beverage dispenser comprising a set of beverage preparation assemblies. A dedicated air extraction duct and fan are connected with each assembly which allows to control the air flow in each assembly separately.

As is known, in this type of machine the mixing system comprises a mixing chamber in which the soluble product in powder form is introduced by gravity, since it originates from a container arranged above said mixing chamber. Usually, the water is introduced in the mixing chamber by means of an adapted duct.

A dispensing device, provided with a dispensing nozzle or spout, through which the beverage is dispensed from the mixing chamber to the glass, is located below the mixing chamber.

It is known that the fall of the soluble product in powder form into the mixing chamber generates in the mixing system a dust cloud (the characteristics of which depend on the particle size, the type and the physical characteristics of the soluble product), which propagates outside the vending machine, causing evident drawbacks. In the case of hot beverages, a cloud of steam is also added to said cloud.

In order to obviate this problem, these machines of the known type are usually provided with a suction apparatus, for aspirating said dust and/or steam clouds that exit from the mixing chamber, such suction apparatus comprising normally a suction box, provided with an opening which faces the mixing chamber and connected by means of a tube to a suction fan.

Although useful to limit the outflow of dust and steam from the machine, these suction apparatuses of the known type have some limitations and drawbacks, which include limited versatility.

In fact, since the quantity and the characteristics of the dust and/or steam clouds that are created depend on the type of beverage prepared and on the specific characteristics of the soluble product, a configuration of the suction apparatus that is optimum for a certain beverage is scarcely effective when the machine is used to prepare a different beverage or when a different soluble product is used.

In particular, in the suction apparatus of these machines of the known type, the suction power, i.e., the generated suction flow, is determined by the power of the fan and by the size of the suction opening, which are defined during production. Therefore, during operation with the use of certain products, the suction flow is sometimes insufficient and consequently the accumulation of steam and/or dust causes drawbacks such as, for example, the clogging of the outlet from which the soluble product exits.

In other instances, during the preparation of different products, said suction flow is instead excessive, with consequent suction of a certain quantity of soluble product that falls into the mixing chamber, with negative consequences in terms of waste and quality of the beverage produced.

The aim of the present invention is to provide a machine for the automatic dispensing of beverages obtained from soluble products that solves the technical problem described above, obviates the drawbacks and overcomes the limitations of the background arts, since it is provided with a more versatile suction system.

Within this aim, an object of the present invention is to provide a machine for the automatic dispensing of beverages obtained from soluble products that allows to have optimum suction of the steam and/or dust clouds even when used for the preparation of different products.

Another object of the invention is to provide a machine for the automatic dispensing of beverages obtained from soluble products that is easy to provide and economically competitive.

This aim and these and other objects that will become better apparent hereinafter are achieved by a machine according to claim 1.

Further characteristics and advantages will become better apparent from the description of a preferred but not exclusive embodiment of a machine for the automatic dispensing of beverages obtained from soluble products, illustrated by way of non-limiting example with the aid of the accompanying drawings, wherein:

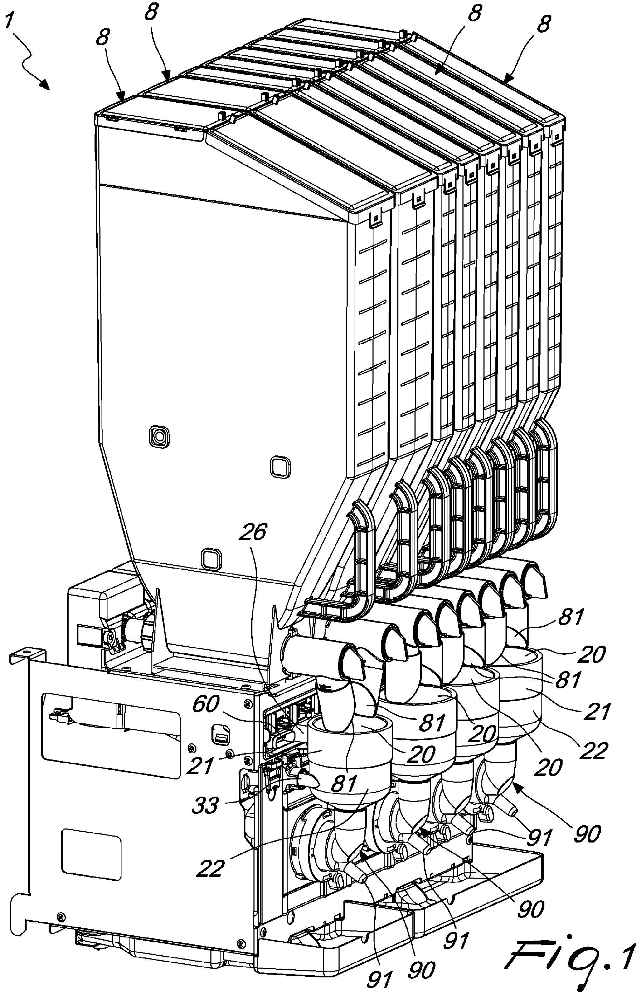

Figure 1 is a perspective view of a possible embodiment of the machine according to the invention;

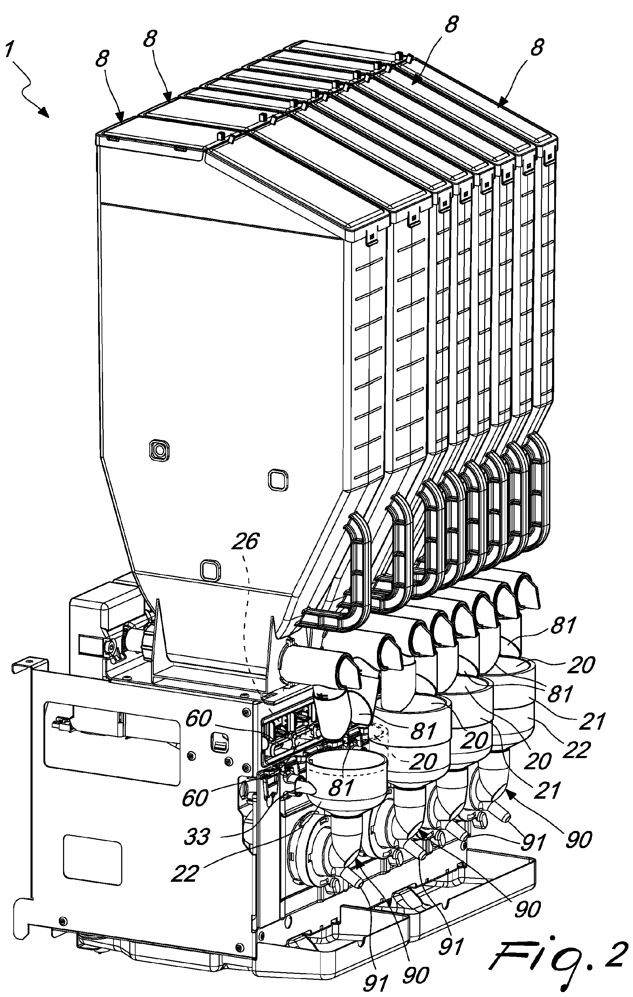

Figure 2 is the same view of Figure 1, in which a portion has been made invisible;

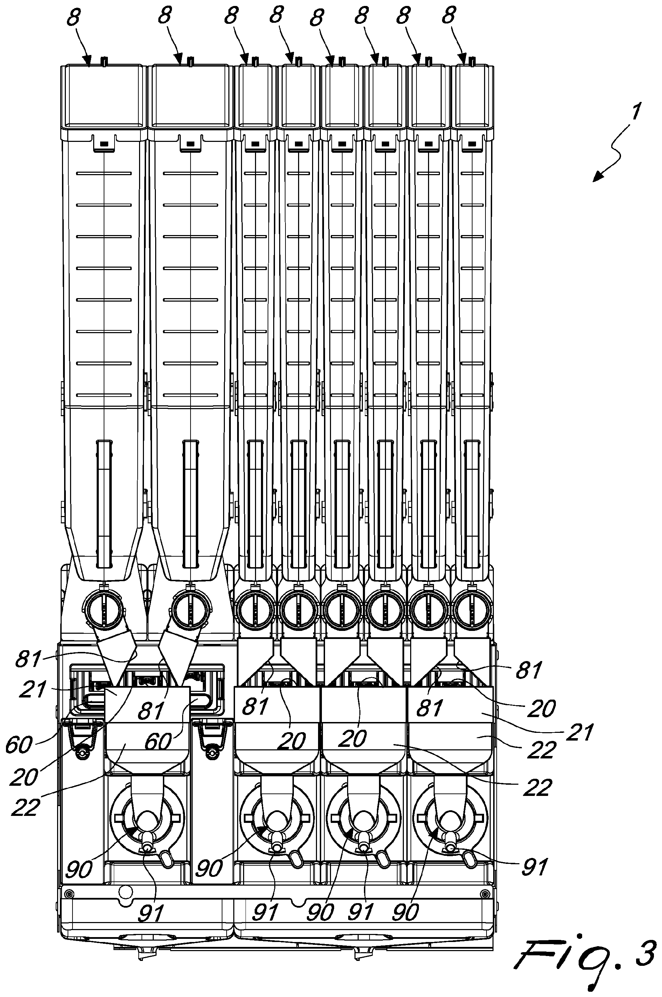

Figure 3 is a front view of the machine of Figure 1;
Figure 4 is a perspective view of only a portion of the machine of Figure 1;

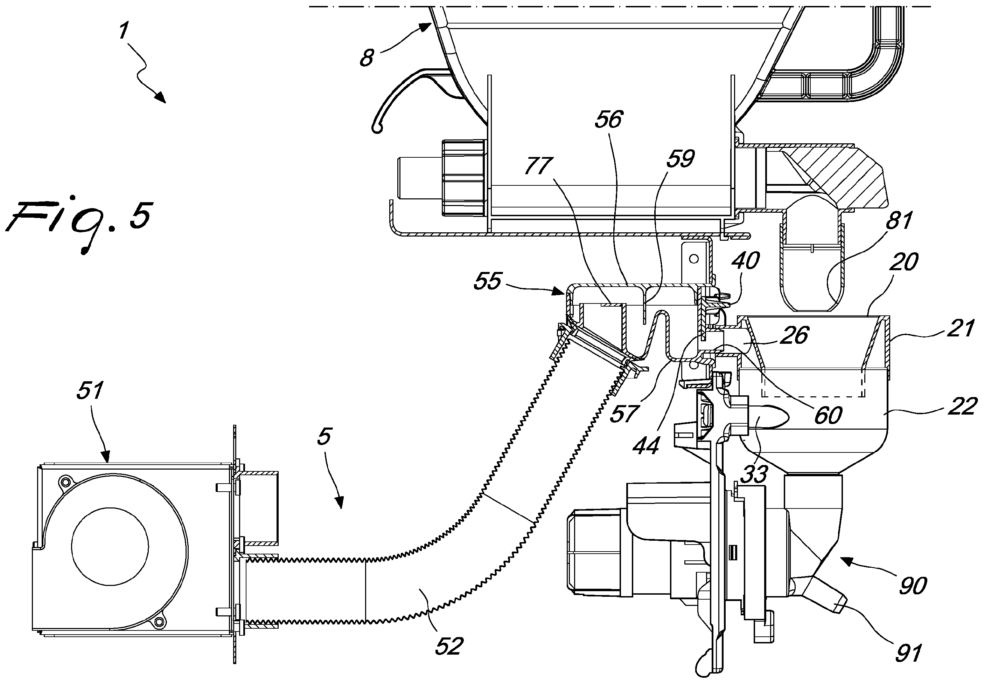

Figure 5 is a sectional view of the portions of Figure 4, taken along a first vertical plane;

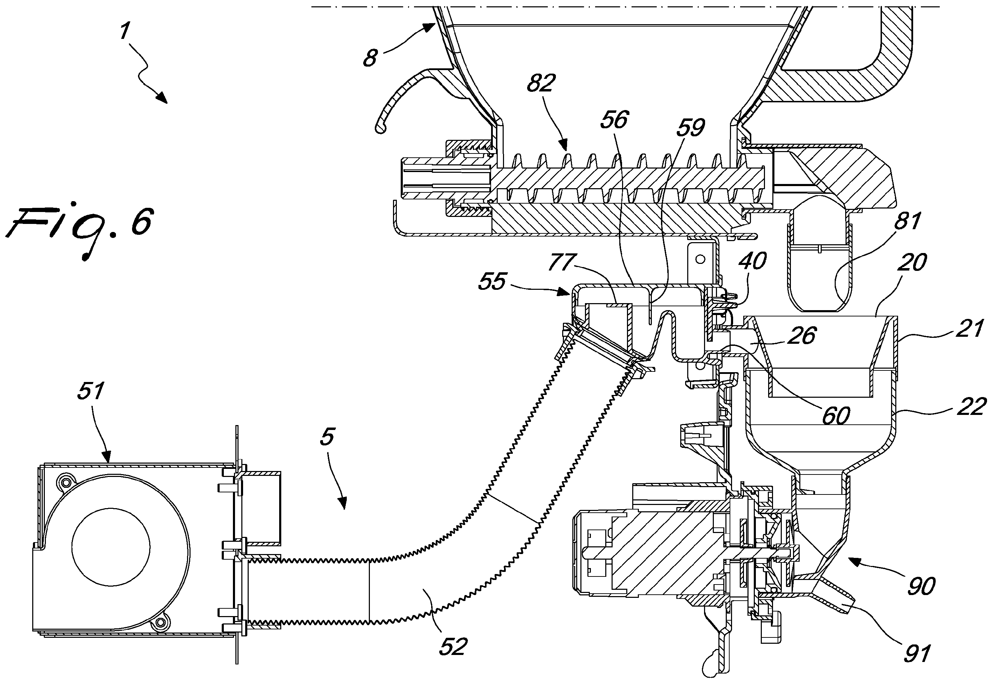

Figure 6 is a sectional view of the portions of Figure 4, taken along a second vertical plane;
Figure 7 is an enlarged-scale perspective view of the suction box of the machine of the preceding figures;

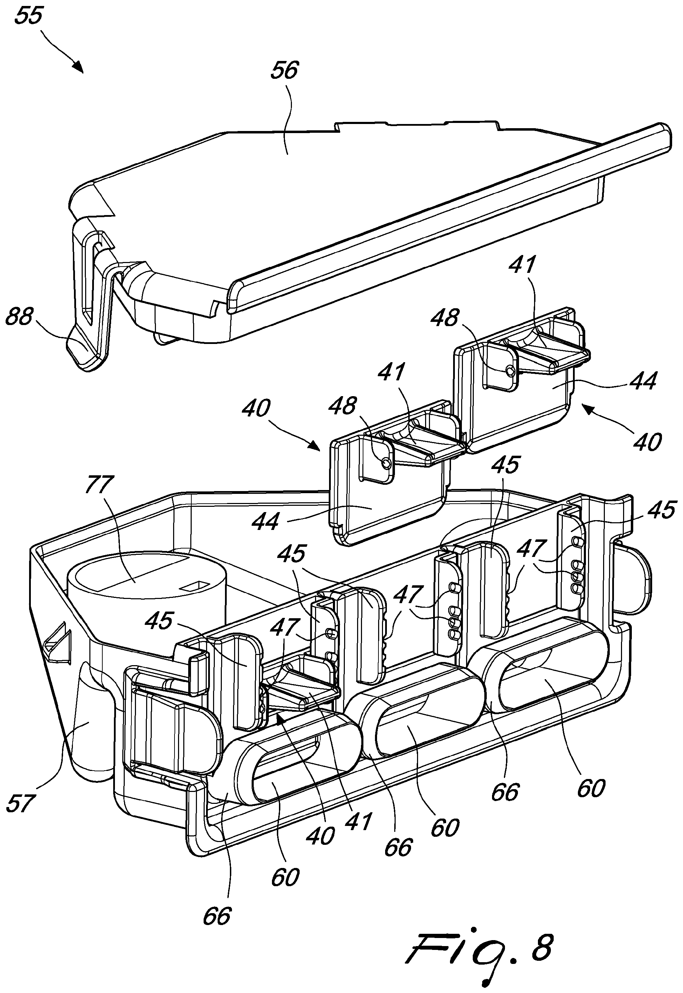

Figure 8 is an exploded view of the suction box of Figure 7.

With reference to the figures, the machine, generally designated by the reference numeral 1, is a machine for the automatic dispensing of beverages obtained from soluble products, such as for example, tea, coffee, chocolate or the like, i.e., a machine of the type known as vending machine, or, in some embodiments, also a semi-automatic coffee machine.

Similarly to machines of the known type, the machine 1 comprises at least one mixing chamber 20, in which a soluble product is mixed with water.

The soluble product, typically in powder form, is introduced in the mixing chamber 20 through one or more ports 81 for feeding the soluble product, which are configured to convey said soluble product from a container 8 or from another source (such as a hopper or any apparatus for the dispensing and/or production of the soluble product) to the mixing chamber 20.

In the preferred embodiments, including the one shown, the machine 1 comprises one or more containers 8 adapted to contain a soluble product and the at least one port 81 for feeding the soluble product is connected to an opening that is present in the lower part of the container 8. The soluble product feeding port 81 is arranged above the mixing chamber 20 so that the soluble product can fall by gravity into the mixing chamber 20.

The container 8 can, in a known manner, comprise a device 82 for the conveyance and dispensing of the soluble product (comprising for example a screw feeder) in order to guide and activate selectively the dispensing of the soluble product.

In the embodiment shown there are multiple containers 8, each connected to a respective soluble product feeding port 81. More than one feeding port 81 can lead into a same mixing chamber 20: for example, two feeding ports 81, each connected to a different container 8, can lead into a same mixing chamber 20.

Preferably, the mixing chamber 20 is formed inside a body, and even more preferably a cup-shaped body, which has an upper opening for the entry of the soluble product. It should be noted that in the example shown the mixing chamber 20 is delimited laterally by a cylindrical side wall.

In even greater detail, in the preferred and illustrated embodiment the cup-shaped body, which defines inside it the mixing chamber 20, has an upper inlet ring 21, through which the soluble product that arrives from the soluble product feeding port 81 passes, and a lower bowl 22 into which a water feeding duct 33 leads and in which the soluble product makes contact with the water.

In a known manner, the machine 1 comprises in fact at least one duct 33 for feeding water to the mixing chamber 20 in order to introduce the hot or cold water into the mixing chamber 20.

The machine 1 comprises, in a known manner, at least one beverage dispensing device 90, which is arranged below the mixing chamber 20 and is in communication therewith, configured to dispense the beverage obtained in the mixing chamber 20, from the chamber to an underlying space adapted to accommodate a cup or other container, preferably through a dispensing nozzle 91.

The machine 1 further comprises a suction apparatus 5 configured to aspirate dust and/or steam from the mixing chamber 20, i.e., to aspirate the dust of soluble material that tends to create a cloud and/or any steam created by the hot water, which tend to propagate out of the mixing chamber 20 during operation.

In greater detail, the suction apparatus 5 comprises at least one suction port 60 which is arranged proximate to the mixing chamber 20 (being in fluid communication with it or facing it directly) and is in fluid communication (for example by means of a suction duct 52) with a flow generation device 51 configured to create a suction flow. Said flow generation device 51 is preferably a suction fan of a known type.

In the preferred and illustrated embodiment, the suction port 60 is connected to the mixing chamber 20 by means of a suction channel 26.

According to a particular practical solution, the suction port 60 is surrounded by a connection frame 66 adapted to be coupled to the suction channel 26.

According to the invention, the suction apparatus 5 comprises a closure element 40 which is associated with the suction port 60 and can be arranged selectively at least in three different positions: a minimum-opening or closed position, a maximum-opening position, and at least one intermediate position.

In the minimum-opening or closed position, the closure element 40 closes the suction port 60 completely or leaves free a minimum opening therein; in other words, in the closed position the closure element 40 is arranged so as to leave in the suction port 60 a minimum opening which in some embodiments can be none.

In the maximum-opening position, the closure element 40 frees a maximum opening in the suction port 60; preferably in this position the closure element 40 frees completely the suction port 60 and therefore the maximum opening coincides with the total aperture of the suction port 60.

In the intermediate position, the closure element 40 closes the suction port 60 partially, leaving free therein an opening that is smaller (in terms of area, i.e., of passage aperture) than the maximum opening and larger than the minimum opening.

In some embodiments, the intermediate positions are more than one, the closure element 40 being arrangeable also in a second intermediate position in which the closure element 40 closes the suction port 60 partially, leaving free therein an opening that is larger than the first intermediate position and smaller than the maximum opening, and optionally also in a third intermediate position and so forth.

In this manner, the positioning of the closure element 40 in the various positions allows the adjustment of the suction flow produced by the suction apparatus 5, by varying the breadth of the passage aperture of the suction port 60.

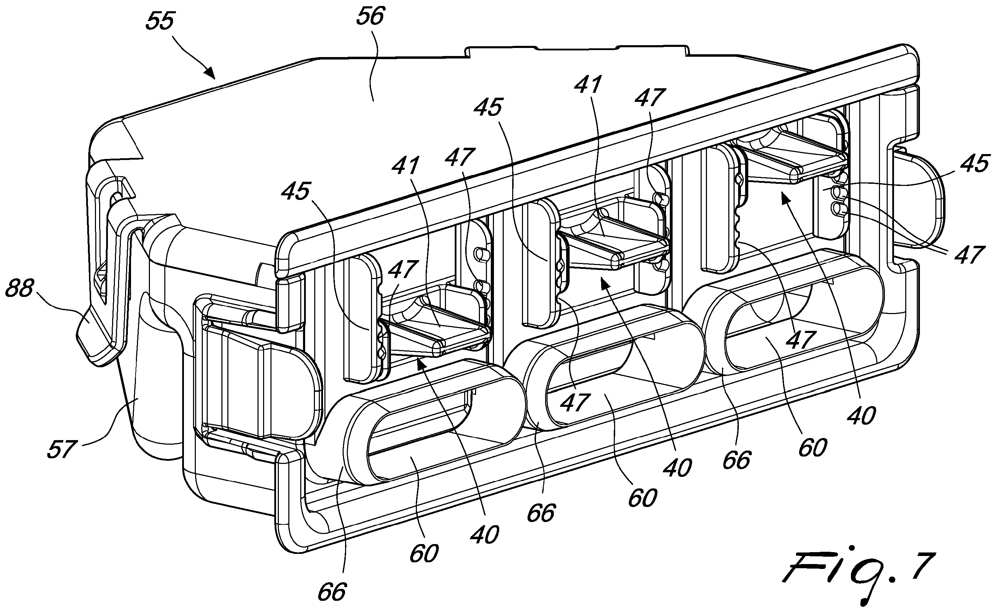

In the example shown in Figure 7, three suction ports 60 are visible, each one with its respective closure element 40 arranged in a different position: in the first suction port 60 to the left of the observer, the closure element 40 is in the minimum-opening position (leaving a minimum opening free in this case), in the central suction port 60 the closure element 40 is in an intermediate position, and in the rightmost suction port the closure element 40 is in the maximum-opening position and frees the suction port 60 completely.

According to the invention, the closure element 40 comprises a shutter-like movable wall 44, which can slide along lateral guiding elements 45, preferably along a vertical axis.

Preferably, the lateral guiding elements 45 comprise positioning recesses 47 adapted to be engaged by protrusions 48 which are present on the closure element 40, or vice versa, for the locking of said closure element 40 in said positions.

According to an optional and advantageous characteristic, the closure element 40 comprises an adjustment tab 41, or other element which can be gripped (such as a bar or knob or ring or other protuberance) and protrudes externally and is configured to allow the manual movement of the closure element 40 between the various positions, allowing to be gripped with the fingers and moved by an operator.

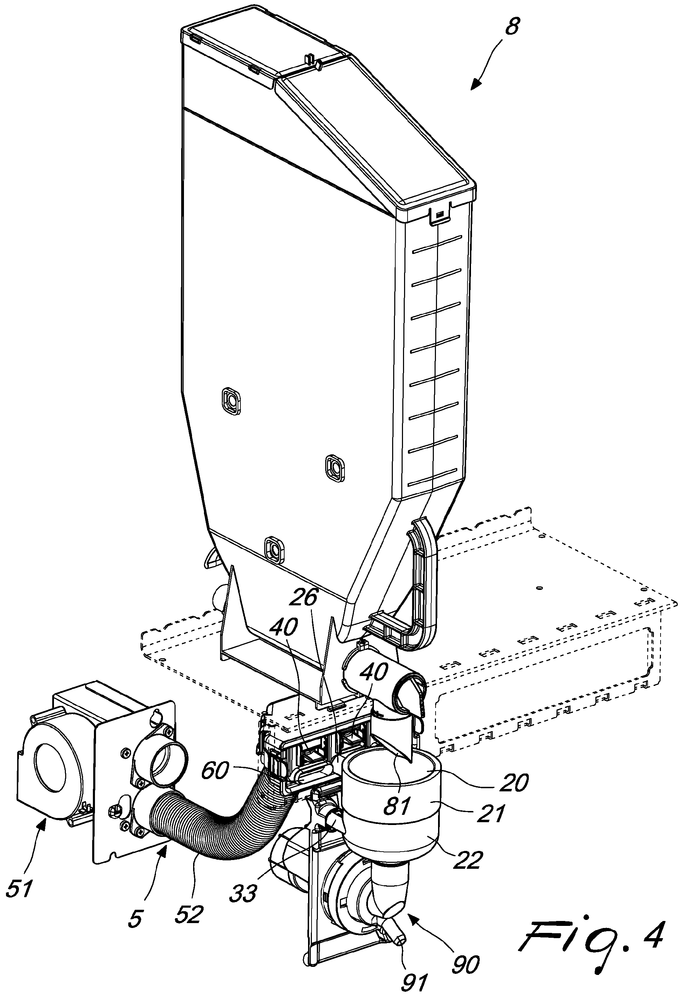

In the preferred embodiments, including the one shown, the suction apparatus 5 comprises a suction box 55 in which one or more suction ports 60 (such as for example the one shown in detail in Figure 7, in which there are three suction ports 60, each designed to be connected to a respective mixing chamber 20) are formed. This suction box 55 is connected to the flow generation device 51 by means of a suction duct 52 (which consist preferably of a flexible tube), as visible in Figure 4.

In greater detail, the suction box 55 shown comprises a front wall directed toward the suction chamber 20 (or suction chambers 20); it should be noted that the suction ports 60 and the lateral guiding elements 45 are arranged on said front wall.

In the non-limiting example shown, the suction box 55 comprises a lower body 57 which is closed in an upper region by a lid 56; the lid 56 is fixed to the lower body 57 by virtue of releasable fixing means 88 (for example flexible engagement elements).

With reference in greater detail to the suction box 55 in the preferred embodiment, it forms inside it a path for the suction flow which comprises a series of bends, by means of one or more internal walls 59 (for example which protrude vertically from the lid 56).

This suction box 55 is also provided with an internal sleeve or stack 77 to which the suction duct 52 connects from outside, said sleeve or stack 77 preferably having a cylindrical shape and comprising an opening on the upper part.

The operation of the machine 1 is clear and evident from what has been described.

In practice it has been found that the machine for the automatic dispensing of beverages obtained from soluble products, according to the present invention, achieves the intended aim and objects, since it has a more versatile suction system, the suction flow of which can be adjusted depending on the requirements. In particular, the operator of the machine can, according to the type of soluble product dispensed, increase the quality of the beverage by adjusting the suction flow.

Another advantage of the machine according to the invention resides in that it allows to have optimum suction of the steam and/or dust clouds even when used for the preparation of different products.

A further advantage of the machine according to the invention, resides in that it is easy to provide and economically competitive.

The machine for the automatic dispensing of beverages obtained from soluble products thus conceived is susceptible of numerous modifications and variations.

All the details may furthermore be replaced with other technically equivalent elements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A machine (1) for the automatic dispensing of beverages obtained from soluble products, such as milk, chocolate, tea, coffee, or the like, comprising:
- at least one mixing chamber (20), in which a soluble product is mixed with water;
- one or more ports (81) for feeding the soluble product, which are configured to convey the soluble product from a container (8) or other source to the mixing chamber (20);
- at least one duct (33) for feeding water to the mixing chamber (20);
- a suction apparatus (5) configured to aspirate dust and/or steam from the mixing chamber (20);
wherein said suction apparatus (5) comprises at least one suction port (60), which is arranged proximate to the mixing chamber (20) and/or in fluid communication with the mixing chamber (20) and is in fluid communication with a flow generation device (51) configured to create a suction flow;
**characterized in that** said suction apparatus (5) comprises a closure element (40) which is associated with said suction port (60) and can be arranged selectively at least in:
- a minimum-opening or closed position, in which it closes completely said suction port (60) or leaves free a minimum opening therein,
- a maximum-opening position, in which it frees a maximum opening in said suction port (60),
- at least one intermediate position, in which it closes said suction port (60) partially, leaving free in said suction port (60) an opening that is smaller than said maximum opening and larger than said minimum opening, and wherein said closure element (40) comprises a movable wall (44) which can slide along lateral guiding elements (45) and is accessible from the outside by a user.

2. The machine according to claim 1, wherein said lateral guiding elements (45) comprises positioning recesses (47) adapted to be engaged by protrusions (48) which are present on the closure element (40), or vice versa, for the locking of said closure element (40) in said positions.

3. The machine according to one or more of the preceding claims, wherein said closure element (40) comprises an adjustment tab (41), or another element which can be gripped and protrudes externally, which is configured to allow the manual movement of said closure element (40) between said positions.

4. The machine according to one or more of the preceding claims, wherein said suction port (60) is connected to said mixing chamber (20) by means of a suction channel (26).

5. The machine according to one or more of the preceding claims, wherein said suction apparatus (5) comprises a suction box (55) in which one or more of said at least one suction port (60) are provided, said suction box (55) being connected to said flow generation device (51) by means of a suction duct (52).

6. The machine (1) according to claims 1 and 5 or according to claims 2 and 5, wherein said suction box (55) comprises a front wall which is directed toward said suction chamber (20), said at least one suction port (60) and said lateral guiding elements (45) being arranged on said front wall.

7. The machine according to one or more of the preceding claims, wherein said mixing chamber (20) is formed by a cup-shaped body which has an upper opening for the entry of the soluble product.

## Patentansprüche

1. Eine Maschine (1) zum automatischen Ausgeben von Getränken aus löslichen Produkten, wie zum Beispiel Milch, Schokolade, Tee, Kaffee oder dergleichen, die Folgendes umfasst:
- mindestens eine Mischkammer (20), in der ein lösliches Produkt mit Wasser gemischt wird;
- eine oder mehrere Öffnungen (81) zum Zuführen des löslichen Produkts, die ausgebildet sind, um das lösliche Produkt von einem Behälter (8) oder einer anderen Quelle der Mischkammer (20) zuzuführen;
- mindestens eine Leitung (33) zum Zuführen von Wasser an die Mischkammer (20);
- eine Saugvorrichtung (5), ausgebildet, um Staub und/oder Dampf aus der Mischkammer (20) anzusaugen;
wobei die Saugvorrichtung (5) mindestens einen Sauganschluss (60) umfasst, der in der Nähe der Mischkammer (20) und/oder in Fluidaustausch mit der Mischkammer (20) angeordnet ist und in Fluidaustausch mit einer Strömungserzeugungsvorrichtung (51) steht, die ausgebildet ist, um einen Saugstrom zu erzeugen;
**dadurch gekennzeichnet, dass** die Saugvorrichtung (5) ein Verschlusselement (40) umfasst, das mit dem Sauganschluss (60) in Verbindung steht und wahlweise angeordnet sein kann in zumindest:
- einer Minimalöffnungs- oder einer geschlossenen Position, in welcher es den Sauganschluss (60) vollständig verschließt oder eine freie Minimalöffnung darin lässt,
- einer Maximalöffnungsposition, in welcher es eine Maximalöffnung in dem Sauganschluss (60) freigibt,
- mindestens einer Zwischenposition, in welcher es den Sauganschluss (60) teilweise verschließt und dabei in dem Sauganschluss (60) eine Öffnung frei lässt, die kleiner ist als die Maximalöffnung und größer als die Minimalöffnung, wobei das Verschlusselement (40) eine bewegliche Wand (44) umfasst, die entlang seitlichen Führungselementen (45) gleiten kann und auf die von außen durch einen Benutzer zugegriffen werden kann.

2. Die Maschine gemäß Anspruch 1, wobei die seitlichen Führungselemente (45) Positionieraussparungen (47) umfassen, ausgebildet, um mit Vorsprüngen (48) in Eingriff zu stehen, die am Verschlusselement (40) vorhanden sind, oder umgekehrt, zum Verriegeln des Verschlusselements (40) in den Positionen.

3. Die Maschine gemäß einem oder mehreren der obigen Ansprüche, wobei das Verschlusselement (40) eine Verstelllasche (41) oder ein anderes Element umfasst, das ergriffen werden kann, nach außen vorsteht und ausgebildet ist, um die manuelle Bewegung des Verschlusselements (40) zwischen den Positionen zu gestatten.

4. Die Maschine gemäß einem oder mehreren der obigen Ansprüche, wobei der Sauganschluss (60) über einen Ansaugkanal (26) mit der Mischkammer (20) verbunden ist.

5. Die Maschine gemäß einem oder mehreren der obigen Ansprüche, wobei die Saugvorrichtung (5) einen Saugkasten (55) umfasst, in dem einer oder mehrere des mindestens einen Sauganschlusses (60) bereitgestellt sind, wobei der Saugkasten (55) mit der Strömungserzeugungsvorrichtung (51) über eine Saugleitung (52) verbunden ist.

6. Die Maschine (1) gemäß den Ansprüchen 1 und 5 oder 2 und 5, wobei der Saugkasten (55) eine Vorderwand umfasst, die der Saugkammer (20) zugewandt ist, wobei der mindestens eine Sauganschluss (60) und die seitlichen Führungselemente (45) an der Vorderwand angeordnet sind.

7. Die Maschine gemäß einem oder mehreren der obigen Ansprüche, wobei die Mischkammer (20) aus einem becherförmigen Körper besteht, der eine obere Öffnung zum Hineingeben des löslichen Produkts hat.

## Revendications

1. Machine (1) pour la distribution automatique de boissons obtenues à partir de produits solubles, tels que du lait, du chocolat, du thé, du café ou similaires, comprenant :
- au moins une chambre de mélange (20), dans laquelle un produit soluble est mélangé à de l'eau;
- un ou plusieurs orifices (81) pour alimenter le produit soluble, qui sont configurés pour acheminer le produit soluble depuis un récipient (8) ou une autre source vers la chambre de mélange (20) ;
- au moins un conduit (33) pour alimenter de l'eau à la chambre de mélange (20) ;
- un dispositif d'aspiration (5) configuré pour aspirer la poussière et/ou la vapeur de la chambre de mélange (20) ;
où ledit dispositif d'aspiration (5) comprend au moins un orifice d'aspiration (60), qui est disposé à proximité de la chambre de mélange (20) et/ou en communication fluidique avec la chambre de mélange (20) et qui est en communication fluidique avec un dispositif de génération de flux (51) configuré pour créer un flux d'aspiration ;
**caractérisée en ce que** ledit dispositif d'aspiration (5) comprend un élément de fermeture (40) qui est associé audit orifice d'aspiration (60) et peut être disposé de manière sélective au moins dans :
- une position d'ouverture minimale ou fermée, dans laquelle il ferme complètement ledit orifice d'aspiration (60) ou laisse libre une ouverture minimale dans celui-ci,
- une position d'ouverture maximale, dans laquelle il libère une ouverture maximale dans ledit orifice d'aspiration (60),
- au moins une position intermédiaire, dans laquelle il ferme partiellement ledit orifice d'aspiration (60), laissant libre dans ledit orifice d'aspiration (60) une ouverture qui est plus petite que ladite ouverture maximale et plus grande que ladite ouverture minimale, et où ledit élément de fermeture (40) comprend une paroi mobile (44) qui peut coulisser le long d'éléments de guidage latéraux (45) et qui est accessible de l'extérieur par un utilisateur.

2. La machine selon la revendication 1, où lesdits éléments de guidage latéraux (45) comprennent des évidements de positionnement (47) adaptés pour être engagés par des saillies (48) qui sont présentes sur l'élément de fermeture (40), ou vice versa, pour le verrouillage dudit élément de fermeture (40) dans lesdites positions.

3. La machine selon une ou plusieurs des revendications précédentes, où ledit élément de fermeture (40) comprend une languette de réglage (41), ou un autre élément pouvant être saisi et faisant saillie vers l'extérieur, qui est configuré pour permettre le déplacement manuel dudit élément de fermeture (40) entre lesdites positions.

4. La machine selon une ou plusieurs des revendications précédentes, où ledit orifice d'aspiration (60) est relié à ladite chambre de mélange (20) au moyen d'un canal d'aspiration (26) .

5. La machine selon une ou plusieurs des revendications précédentes, où ledit dispositif d'aspiration (5) comprend un boîtier d'aspiration (55) dans lequel sont prévus un ou plusieurs desdits au moins un orifice d'aspiration (60), ledit boîtier d'aspiration (55) étant relié audit dispositif de génération de flux (51) au moyen d'un conduit d'aspiration (52).

6. La machine (1) selon les revendications 1 et 5 ou selon les revendications 2 et 5, où ledit boîtier d'aspiration (55) comprend une paroi avant qui est dirigée vers ladite chambre d'aspiration (20), ledit au moins un orifice d'aspiration (60) et lesdits éléments de guidage latéraux (45) étant disposés sur ladite paroi avant.

7. La machine selon une ou plusieurs des revendications précédentes, où ladite chambre de mélange (20) est formée par un corps en forme de coupelle qui présente une ouverture supérieure pour l'entrée du produit soluble.
